# EUROPÄISCHE PATENTSCHRIFT

(11) **EP 1 595 798 B1**
(45) Veröffentlichungstag und Bekanntmachung des Hinweises auf die Patenterteilung: **19.11.2008**
(21) Anmeldenummer: 05010531.1
(22) Anmeldetag: 13.05.2005
(51) Int. Cl.: B65C 9/18, A22C 11/12

(54) **Etikettenspender**
Label dispenser
Distributeur d'étiquettes

(30) Priorität: 14.05.2004 DE 102004024129
(43) Veröffentlichungstag der Anmeldung: 16.11.2005
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Eisenführ, Speiser & Partner

(56) Entgegenhaltungen:
- EP-A- 0 542 663
- EP-A- 1 447 333
- DE-A1- 1 930 968
- DE-A1- 19 901 039
- US-B1- 6 602 376

## Beschreibung

Die Erfindung betrifft eine Spendevorrichtung gemäß Anspruch 1 für Etiketten zum Spenden dieser an Verpackungs-Verschließmaschinen wie Wurst-Clipmaschinen mit einem eine Führungsbahn aufweisenden Träger, einem Vorschub zum getakteten Fördern eines Etikettenstranges entlang der Führungsbahn hin zu einer Vereinzelungseinrichtung, welche ein erstes und ein zweites gegeneinander scherend wirkendes Messer zum Abtrennen des vordersten Etiketts vom Etikettenstrang aufweist, wobei das erste Messer schwenkbar an dem Träger angelenkt ist und wobei beide Messer federnd gegeneinander vorgespannt sind.

Spendevorrichtungen der genannten Art sind insbesondere zum Zuführen von halbsteifen Etiketten-Anhängern bei der Wurstproduktion bekannt. Die Etiketten-Anhänger werden hierbei nahe an den Bereich einer Wurst-Clipmaschine herangebracht, in dem der Verschließvorgang der Wurst stattfindet.

Die Wurst-Clipmaschine weist bekanntermaßen ein Füllrohr auf, durch welches eine zunächst einseitig verschlossene schlauchförmige Verpackungshülle intermittierend mit Füllgut befüllt wird. Die Verpackungshülle wird beispielweise von einem gerafften, auf dem Füllrohr angeordneten Vorrat an einer Rückhalteeinrichtung (Darmbremse) vorbei durch den Druck des Befüllens abgezogen. Verdrängerelemente, zwischen denen an der befüllten Verpackungshülle ein zopfförmiger Abschnitt gebildet wird, befinden sich in Füllrichtung hinter der Füllrohrmündung. Ein Etiketten-Anhänger wird getaktet und synchron zu dem Füllvorgang und dem Verdrängen bekanntermaßen so an den gebildeten zopfförmigen Abschnitt herangeführt, dass dieser Abschnitt und der Etiketten-Anhänger zumindest teilweise überlappen. Der Etiketten-Anhänger wird anschließend von einer mittels Verschließwerkzeugen auf den Zopfabschnitt gesetzten und verschlossenen Verschlussklammer mit erfasst und an der so fertiggestellten Wurst befestigt. Dabei kann der Etiketten-Anhänger beispielsweise einen verjüngten Abschnitt, an dem er von der Verschlussklammer umgriffen wird, oder ein Loch aufweisen, das von der zunächst unverschlossenen Verschlussklammer durchsetzt wird, so dass der Etikettenanhänger nach dem Verschließen nicht mehr zerstörungsfrei entfernt werden kann.

Insgesamt steht für die Etikettenzuführung in dem Überlappungsereich wenig Platz zur Verfügung, da dort gleichzeitig auch die Verdrängerelemente und Verschließwerkzeuge in Eingriff sind und ferner Sicherheitsabdeckungen und dergleichen das Personal schützen. Die Spendevorrichtung für Etiketten muss daher zumindest in ihrem vorderen Abgabebereich eine möglichst geringe Baugröße aufweisen.

Üblicherweise wird der Vorschub der Spendervorrichtung durch Vorschubrollen gebildet, die jedoch den Nachteil haben, dass ein Schlupf zwischen der Rollenoberfläche und den Etiketten zu einer Fehlausrichtung der Etiketten im Taktzyklus führen kann, zumal wegen des getakteten Vorschubs immer wieder erhebliche Beschleunigungen und Verzögerungen bewältigt werden müssen. Dies gilt in besonderem Maße für die schon erwähnten Etiketten-Anhänger, welche regelmäßig aus steiferem Material als beispielsweise selbstklebende Etiketten bestehen und schon deshalb ein höheres Gewicht haben. Aus der DE 199 01 039 A1 ist daher eine Zuführvorrichtung für Etiketten-Anhänger bekannt, die als Vorschubeinrichtung einen translatorisch hin- und her bewegbaren Finger aufweist. Die darin offenbarte Vorrichtung ist für das Zuführen eines Strangs über Perforationen aneinanderhängender Etiketten ausgestaltet, von denen das vorderste Etikett nach dem Befestigen an dem Zopfabschnitt der gleichzeitig verschlossenen Wurst von den nachfolgenden Etiketten entlang der Perforationslinie abgerissen wird.

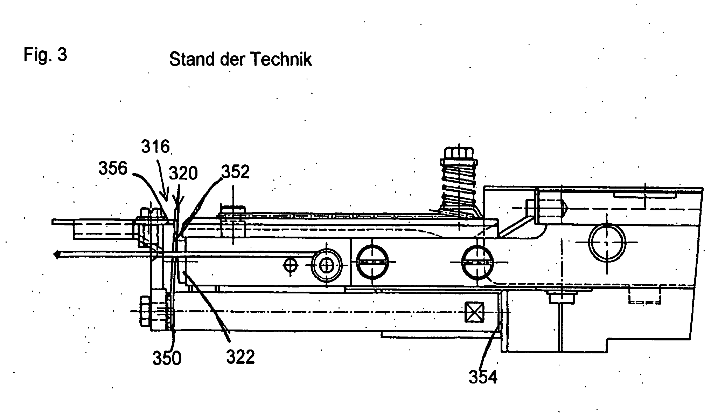

Alternativ kann auch ein Etikettenstrang ohne Perforationen verwendet werden, indem das vorderste Etikett vom Etikettenstrang mittels der eingangs beschriebenen Anordnung zweier gegeneinander scherend wirkender Messer abgetrennt wird. Auch solche Vorrichtungen sind bereits bekannt; ein Beispiel hierfür ist in Fig. 3 illustriert. Ein erstes (oberes) Messer 320 (alle Orts- und Richtungsangaben, wie oben, unten, vorne, hinten, etc., sind bezogen auf eine bestimmte Einbaulage und beschreiben eine Relativanordnung der betreffenden Elemente, die selbstverständlich bei einer anderen Einbaulage vertauscht sein kann), welches aus einem dünnen (Feder-)Stahl besteht, ist mit einem (unteren) Befestigungsbereich 350 an einem Hebel 328 befestigt. Der Hebel 328 ist schwenkbar an einem Träger 310 angelenkt, wodurch das obere Messer 320 zusammen mit einem zweiten, ortsfest an dem Träger 10 angeordneten (unteren) Messer 322 eine Schere bildet.

Damit das obere Messer 320 stets an der (oben liegenden) Schnittkante des unteren Messers 310 anliegt, ist sein (oberer) Anstellbereich 352 gegenüber dem Befestigungsbereich 350 abgewinkelt und unter Federkraft gegen das untere Messer 322 angestellt. Die Position des oberen Messers 322 wird zur Einstellung des zwischen beiden Messern 320, 322 befindlichen Schneidspaltes sowie der Federkraft mittels Distanzscheiben 354 in Richtung senkrecht zur Schneidebene justiert. Hierdurch können fertigungsbedingte Toleranzen ausgeglichen werden. Jedoch ist bei der Montage ein sehr genauer Abstand zwischen beiden Messern einzuhalten. Diese Einstellprozedur ist sehr zeitaufwändig.

Damit der Schneidspalt sich während des Scherens nicht ungewollt gegen die begrenzte Federkraft öffnet, wird das obere Messer 320 zusätzlich am oberen Ende seines Anstellbereichs 352 mittels eines Andruckstücks 356 gegen das untere Messer 322 angedrückt. Dieses Andruckstück 356 ist zusammen mit dem oberen Messer 320 an dem Hebel befestigt und wird mit diesem abgeschwenkt. Die Einstellung des Andruckstücks 356 erfordert einen weiteren Arbeitsgang, der ebenfalls sehr präzise ausgeführt werden muss, da dies einerseits die Federkraft beeinflusst und andererseits aufgrund der Schwenkbewegung des Hebels ein Wegausgleich zu berücksichtigen ist.

Ferner benötigt das Andruckstück 356 zusammen mit seiner Befestigung zusätzlichen Platz im Übergabebereich der Spendevorrichtung und läuft damit dem Erfordernis einer möglichst kompakten Bauweise zuwider.

Um diesen Problemen zu entgegnen und ein sicheres Spenden von Etiketten an Verpackungs-Verschließmaschinen zu gewährleisten, wird bei der eingangs genannten Spendevorrichtung erfindungsgemäß das zweite Messer mittels einer Feder im Wesentlichen senkrecht zur Scherebene gegen das erste Messer angedrückt.

Durch diese Maßnahme kann das erste Messer eine vergleichsweise dicken Klinge aufweisen, die ohne zusätzliche Andruckmittel der durch die Feder, die vorzugsweise als Druckfeder ausgebildet ist, ausgeübten Kraft standhält. Aufgrund des wesentlich größeren Federwegs der Druckfeder verglichen mit dem des bekannten Messers entfällt die genaue Einstellung des Schneidspalts mittels Passelementen. Die erfindungsgemäße Messeranordnung stellt sich automatisch so ein, dass ein gleichbleibend schmaler Schneidspalt sicher gestellt ist, auch während ein durch die Schwenkbewegung verursachter Wegausgleich erfolgt. Ferner werden beide Messer stets mit annähernd konstanter Kraft federnd gegeneinander vorgespannt.

Ein weiterer Vorteil der erfindungsgemäßen Spendevorrichtung liegt darin, dass das obere Messer selbst keine Vorspannung mehr erzeugt sondern starr ist und daher gerade statt abgewinkelt ausgeführt sein kann. Hierdurch ist es möglich, das obere Messer flach (nach-)zuschleifen, wobei die Richtung des Schliffs vorzugsweise in Schneidrichtung des Messers erfolgen kann. Dies ist bei dem bekannten oberen Messer nicht möglich, da dessen abgewinkelter unterer Befestigungsbereich aus der Ebene der Schneidfläche herausgeragt. Das bekannte Messer muss daher quer zur Schneidrichtung geschliffen werden, wodurch wiederum seine Schnittleistung und Standzeit schlechter ausfielen.

Das erste Messer ist mittels eines Hebels um eine im Wesentlichen in der Mündungsebene der Führungsbahn und senkrecht zur Vorschubrichtung angeordneten Schwenkachse schwenkbar angelenkt. Das zweite Messer weist eine Schneidkante auf, die im Wesentlichen in der Mündungsebene der Führungsbahn liegt.

Genaugenommen beschreibt die Bewegung des schwenkbaren (oberen) Messers eine Zylinderoberfläche um die Schwenkachse. Jedoch ist deren Radius, d.h. der Abstand zwischen der Schwenkachse und der Schneidkante der Messer so groß, dass die Scherebene durch eine Tangentialebene an diese Zylinderoberfläche im Bereich der Schneidkante des festen (unteren) Messers idealisiert werden kann. Da die Schwenkachse vorteilhafter Weise in der Mündungsebene der Führungsbahn liegt, d.h. in der Ebene, die von der Führungsbahn in deren Mündungsbereich vor der Scherebene definiert wird, und die Schneidkante ebenfalls annähernd bündig mit der Führungsbahn abschließt, verläuft die Scherebene senkrecht zur Führungsbahn in deren Mündungsbereich und gewährleistet somit das bestmögliche Schnittresultat.

Das zweite Messer weist vorzugsweise eine gegenüber der senkrecht zur Führungsbahn verlaufenden Scherebene derart abgewinkelte Scherfläche auf, dass das erste Messer in jeder Phase der Scherbewegung an der Schneidkante des zweiten Messers anliegt. Aufgrund der Schwenkbewegung des zweiten Messers um die Schwenkachse nimmt dieses nämlich gegenüber dem nicht mitschwenkenden ersten Messer stets unterschiedliche Neigungswinkel ein. Damit trotzdem der Schneidspalt unabhängig von den Neigungswinkeln immer konstant gehalten werden kann, drückt einerseits die Druckfeder das zweite Messer stets gegen das erste Messer an, andererseits sorgt die abgewinkelte Scherfläche des zweiten Messers dafür, dass auch immer dessen (obere) Schneidkante und nicht etwa seine der Schneidkante gegenüber liegende (untere) Kante an dem ersten Messer anliegt und die Scherwirkung ausbleibt.

Nachfolgend werden weitere Aufgaben, Merkmale und Vorteile der Erfindung anhand von Ausführungsbeispielen mit Hilfe der Zeichnungen näher erläutert. Es zeigen:
- Fig. 1 A: eine Seitenansicht eines Ausführungsbeispiels der erfindungsgemäßen Spendevorrichtung;
- Fig. 1B: das Ausführungsbeispiel der Spendevorrichtung gemäß Fig. 1A in der Draufsicht;
- Fig.2A: eine Vorderansicht auf die Messeranordnung im Fall des Ausführungsbeispiels aus den Fig. 1A und 1B;
- Fig. 2B: eine Seitenansicht des Ausführungsbeispiels der Spendevorrichtung aus Fig. 1A und 1B in einer abgeschwenkten Position;
- Fig. 3: eine Seitenansicht auf eine aus dem Stand der Technik bekannte Spendevorrichtung; und
- Fig. 4: ein Schaltplan für die Ansteuerung eines Vorschubs und einer Schwenkbewegung bei einem Ausführungsbeispiel der erfindungsgemäßen Spendevorrichtung.

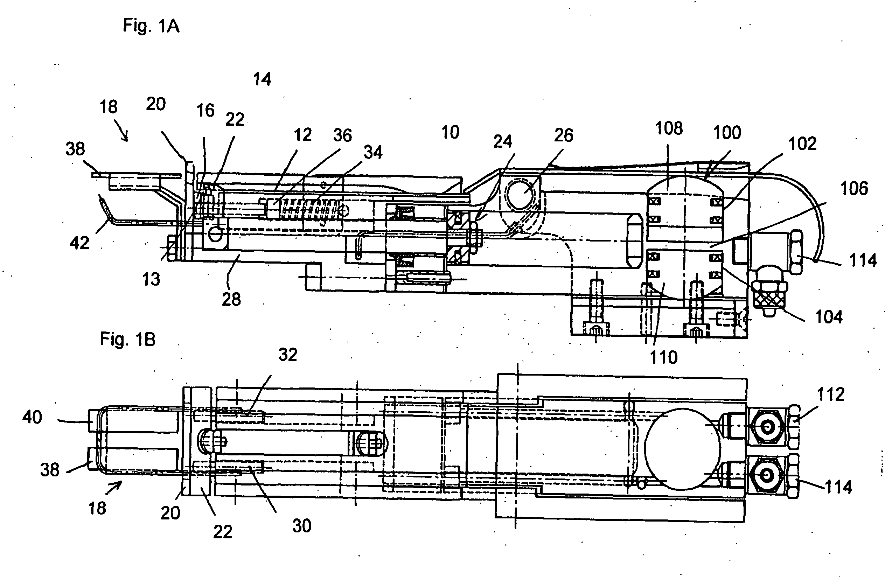

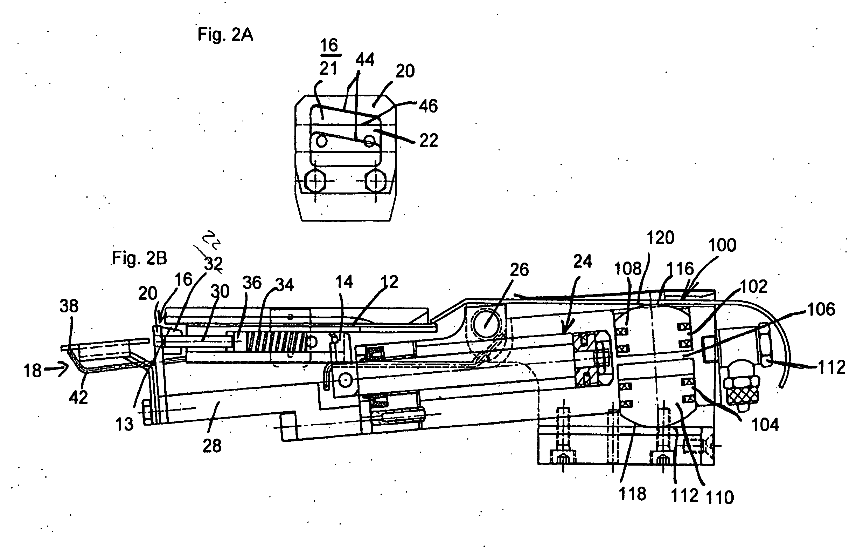

Der erfindungsgemäße Etikettenspender wird zunächst anhand der Fig. 1A und 1B in einer nicht abgeschwenkten Vorschubposition und anschließend anhand der Fig. 2A und 2B in einer abgeschwenkten Spendeposition erläutert.

Der Etikettenspender weist einen Träger 10 auf, in den eine Führungsbahn 12 für den nicht dargestellten Etikettenstrang eingelassen ist. Der Etikettenstrang wird mittels eines in die Führungsbahn 12 ragenden Fingers 14, der in korrespondierende Handhaben in dem Etikettenstrang eingreift, beispielsweise Löcher, Absätze oder dgl., entlang der Führungsbahn hin zu einer Vereinzelungseinrichtung 16 gefördert. Der Etikettenstrang wird auf diese Weise typischerweise von einem zu einer Rolle aufgewickelten Vorrat abgezogen und einer Übergabevorrichtung 18 zugeführt. Auf diesem Weg durchsetzt der Etikettenstrang ein zwischen einem ersten oberen Messer 20 und einem zweiten unteren Messer 22 ausgebildetes Fenster 21, vgl. Fig. 2A, in der Vereinzelungsvorrichtung 16, wenn diese sich in der nicht abgeschwenkten Position befindet.

Der Finger 14 ist verschiebbar gelagert und wird mittels einer Zylinder-Kolben-Einheit 24 taktweise hin und her bewegt. Ist er in der in Fig. 1A dargestellten vorderen Position angelangt, so befindet sich das vorderste Etikett des Etikettenstrangs in der Übergabevorrichtung 18. Als nächstes setzt ein nach unten gerichteter Schwenkvorgang des oberen Messers 20 ein. Dabei gleitet es mit seiner dem unteren Messer 22 zugewandten Schnittkante an dessen dem oberen Messer 20 zugewandten Schnittkante vorbei und durchtrennt den Etikettenstrang hinter dem vordersten Etikett.

Die Schwenkbewegung wird um eine Schwenkachse 26 ausgeführt, deren Mittelachse in etwa in der Ebene der Führungsbahn 12 in deren Mündungsbereich 13 (Mündungsebene), liegt und die zu der Vorschubrichtung des Fingers 14 senkrecht angeordnet ist. Dabei bewegt sich die Schneidkante des oberen Messers 20 auf einer Zylinderbahn um die Schwenkachse 26. Die Schwenkbewegung endet in der in Fig. 2B dargestellten unteren Endposition, in der die Schneidkante des oberen Messers 20 die des unteren Messers 22 vollständig passiert hat.

Das obere Messer 20 ist gemeinsam mit der Übergabevorrichtung 18 an einem um die Schwenkachse 26 drehbar gelagerten Hebel 28 befestigt. Diese Befestigung benötigt keinen Längenausgleich. Ein durch die Schwenkbewegung notwendiger Längenausgleich zur Beibehaltung eines konstanten Schneidspalts wird durch das in dem Träger 10 mittels zweiter Bolzen 30, 32 gleitgelagerte untere Messer 22 erwirkt. Die Bolzen sind vorzugsweise durch eine Presspassung oder eine andere Verbindung fest mit dem Messer verbunden. Der Längenausgleich geschieht auf diese Weise über einen bestimmten Weg parallel zur Mündungsebene, wodurch die Schneidkante des unteren Messers 22 stets in etwa in der Mündungsebene der Führungsbahn liegt.

Für eine im Wesentlichen konstante Andruckkraft sorgt jeweils eine in einer Tasche in dem Träger 10 untergebrachte Druckfeder 34. Die Federn wirken jeweils gegen einen an dem messerfernen Ende der Bolzen 30, 32 anliegenden Kolben oder eine Scheibe 36, der/die zugleich einen vorderen Endanschlag für die Feder bildet. Als Endanschlag ist der Kolben bei der Montage der Spendevorrichtung hilfreich.

Gleichzeitig oder anschließend an das Abschwenken des Hebels 28 wird der Finger 14 in seine Ausgangsposition mittels der Zylinder-Kolben-Einheit 24 zurückgefahren und steht für den Vorschub des nächsten Etiketts in seiner Ausgangsposition bereit.

Während des Abschwenkens und bereits vor dem Durchtrennen des Etikettenstrangs wird das vorderste Etikett von zwei oberen Führungselementen 38, 40 an der Übergabevorrichtung 18 gegen einen an dem Träger 10 befestigten Federbügel 42 angedrückt. Der Federbügel 42 gibt während des fortgesetzten Abschwenkens der Übergabevorrichtung 18 aufgrund seiner Elastizität nach und wird dabei heruntergedrückt. Die Führungselemente 38, 40 liegen beim Abschwenken bereits an dem Federbügel 42 an, bevor das vorderste Etikett von der Vereinzelungseinrichtung 16 von dem übrigen Etikettenstrang abgetrennt wird. Das Etikett wird auf diese Weise fixiert, so dass es während des Abtrennens und noch danach nicht aus seiner so definierten Übergabeposition verrutschen kann, bis es an die hier nicht dargestellte, der Spendevorrichtung nachgeschalteten Verschließmaschine im Bereich eines gebildeten Zopfabschnitts übergeben wird, indem es von dem den Zopfabschnitt verschließenden Clip erfasst und an der Wurst befestigt wird.

Das obere Messer 20 ist verglichen mit den Messern der bekannten Spendevorrichtungen unelastisch und gibt unter dem durch die Druckfeder 34 aufgebrachten Druck nicht nach. Hierdurch und durch die Führung mittels der gleitgelagerten Bolzen 30, 32, wird stets eine wohl definierte Lage der beiden Messer zueinander erzielt. Insbesondere wird so gewährleistet werden, dass das obere Messer 20 während des Schneidvorgangs stets an der diesem zugewandten (vorderen) Schneidkante des unteren Messers 22 anliegt. Zudem ist das untere Messer 22 gegenüber der im Wesentlichen senkrecht zur Mündungsebene verlaufenden Scherebene an seiner Scherfläche abgewinkelt, um eine Freimachung für das sich in der abgeschwenkten Position gegenüber der Scherebene neigende obere Messer zu schaffen, wie in Fig. 2B zu erkennen ist.

Gemäß Fig. 2A, der Vorderansicht auf die Vereinzelungseinrichtung 16, besteht das obere Messer 20 aus einem Rahmen um einen Durchbruch, der eine auf der Unterseite des oberen Rahmenabschnitts ausgebildete Schneide 44 aufweist. Diese Schneide verläuft gegenüber der horizontalen und zur Führungsbahn 12 ausgerichteten Schneidkante 46 des unteren Messer 22 geneigt, um die benötigte Scherkraft über einen längeren Hub zu verteilen. Das untere Messer 22 liegt mit seinen äußeren Bereichen stets an den seitlichen Rahmenabschnitten des oberen Messers 20 an, so dass eine Führung während des gesamten Schervorgangs gewährleistet ist. In der nach unten abgeschwenkten Position des oberen Messers 20 hat die Schneide 44 die Schneidkante 46 des unteren Messers 22 vollständig passiert, so dass ein Durchtrennen des die Vereinzelungsvorrichtung 16 zunächst durchsetzenden Etikettenstrangs sichergestellt ist.

Im Bereich des der Vereinzelungsvorrichtung 16 entgegengesetzten Endes des Hebels 28 ist eine Zylinder-Kolben-Anordnung 100 vorgesehen, die den Hebel zu der oben geschilderten Auf- und Abschwenkbewegung in entgegengesetzte Richtungen antreibt. Die Zylinder-Kolben-Anordnung 100 besteht aus zwei von entgegengesetzten Seiten in den Hebel 28 eingelassene koaxiale Zylinderbohrungen 102, 104, die einen gemeinsamen Boden 106 aufweisen. In jedem der Zylinder 102, 104 ist ein pneumatisch angetriebener Kolben 108, 110 auf- und abbeweglich gelagert, wobei jeder Zylinder von einem separaten Luftanschluss 112, 114 gespeist wird.

Dem entgegen weisen die aus dem Stand der Technik bekannten Spendevorrichtungen einen einfach wirkenden Pneumatikzylinder als Antrieb für das Abschwenken des unteren Hebels bzw. des oberen Messers auf. Für die entgegengesetzte, weniger Kraft beanspruchende Aufwärtsschwenkbewegung wird bekanntermaßen eine Rückstellfeder eingesetzt. Diese Rückstellfeder ist bei Anwendungen in der Wurstherstellung hochdynamisch belastet und muss bei einer Taktrate von typischerweise 100 bis 200 Hüben pro Minute eine Dauerbelastung von einer oder mehreren Millionen Hüben standhalten. Zugleich sind hohe Anforderungen an die Korrosionsbeständigkeit der Feder gestellt, was die Auswahl eines geeigneten Federmaterials schwierig macht.

Der erfindungsgemäße Etikettenspender löst dieses Problem durch die in den Fig. 1A, 1B und 2B gezeigte, in zwei entgegengesetzte Richtungen wirkende und dergestalt eingerichtete Zylinder-Kolben-Anordnung 100, den Hebel 28 gegenüber dem Träger 10 hin- und her- bzw. auf und abschwenkend anzutreiben. Dies erhöht zugleich die Betriebssicherheit und Produktivität der Wurstproduktionsanlage, da Stillstandzeiten durch im Betrieb brechende Federn vermieden werden. Die in entgegengesetzte Richtung wirkende Zylinder-Kolben-Anordnung 100 kann unabhängig von der erfindungsgemäßen Vereinzelungseinrichtung 16 und insbesondere auch zusammen mit einer Vereinzelungseinrichtung 316 gem. Fig. 3 mit einem Federstahlmesser zum Einsatz kommen.

Die Kolben 108, 110 sind jeweils mit gewölbten Kontaktflächen 116, 118 verbunden bzw. unmittelbar versehen, deren Wölbungsradius vorzugsweise dem halben Abstand zwischen beiden Kontaktflächen 116, 118 entspricht. Dies bewirkt, dass ein aus der Schwenkbewegung des Hebels 28 um die Schwenkachse 26 zwangsläufig resultierender linearer Versatz zwischen den Kolbenachsen und dem Träger 10 in einer nahezu perfekten Abrollbewegung der Kontaktflächen 116, 118 auf korrespondierenden Auflageflächen 120, 122 des Trägers 10 resultiert. Hierdurch wird der reibungsbedingte Verschleiß zwischen den Kontaktflächen 116, 118 der Kolben 108, 110 einerseits und den Auflageflächen 120, 122 in dem Träger 10 andererseits minimiert.

Die Wölbung der Kontaktflächen 116, 118 kann eine zylinderförmige Wölbung mit einer zu der Schwenkachse 26 parallelen Achsausrichtung sein. Vorzugsweise ist die Wölbung der Kontaktflächen 116, 118 allerdings eine kugelsegmentförmige Wölbung, da die Kolben dann rotationssymmetrisch sind und ihre Lager in dem Hebelarm nicht ausgerichtet werden müssen.

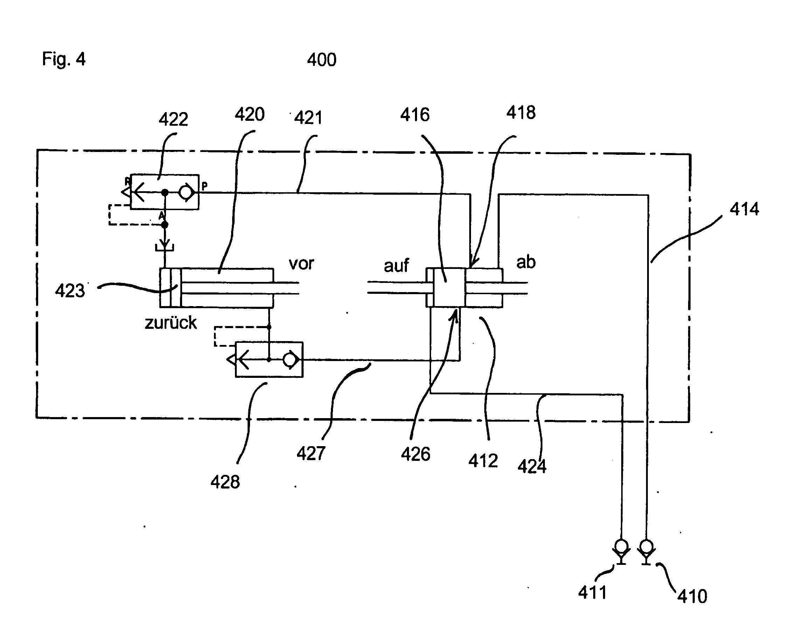

Die Ansteuerung der Zylinder-Kolben-Anordnung 100 und der Zylinder-Kolben-Einheit 24 lässt sich vorteilhafterweise durch eine dem in Fig. 4 gezeigten Ersatzschaltbild entsprechende Pneumatikschaltung 400 verbinden. Ausgehend von zwei nach außen geführten Druckluftanschlüssen 410, 411 wird ein erster, doppeltwirkender Zylinder 412 wahlweise in die eine oder andere Richtung angetrieben. Der erste doppeltwirkende Zylinder 412 repräsentiert die Zylinder-Kolben-Anordnung 100 zum Antreiben der Schwenkbewegung des Hebels 28 und des oberen Messers 20. Zwar ist die Zylinder-Kolben-Anordnung 100 nicht als doppeltwirkender Zylinder sondern als Doppelzylinder mit separaten Kolben ausgestaltet, aber in ihrer Wirkung ist diese äquivalent. In dem dargestellten Schaltzustand ist die rechte Zylinderhälfte über eine Leitung 414 mit Druck beaufschlagt und der Kolben 416 daher in seine Grundstellung nach links gefahren. Dies entspricht der aufgeschwenkten (Grund-)Position des Hebels 28, wie in den Figuren 1A und 1B dargestellt ist.

In der äußersten linken Position, d.h. im Bereich des einen Hubendes des Kolbens 416 wird eine erste Überströmbohrung 418 freigegeben, so dass auch ein zweiter doppeltwirkender Zylinder 420 auf seiner ersten (linken) Seite über eine erste Leitung 421 und ein zwischengeschaltetes erstes Entlüftungsventil 422 mit Druck beaufschlagt wird. Der zweite doppeltwirkende Zylinder 420 repräsentiert die Zylinder-Kolben-Einheit 24 zum Antreiben des Vorschubfingers 14. Die in Fig. 4 dargestellte Schaltstellung entspricht einem eingefahrenen Kolben 423 und somit der zurückgefahrenen Stellung des Fingers 14, wie sie in Fig. 2B dargestellt ist. Der durch die erste Überströmbohrung 418 und das erste Entlüftungsventil 422 eingeleitete Druck treibt den Kolben 423 der zweiten Zylinder-Kolben-Einheit 24 nach rechts und den Finger 14 somit in die Vorschubposition gemäß Fig. 1A. Der Etikettenstrang wird auf diese Weise in Richtung der Übergabevorrichtung 18 gefördert.

Nach einem von außen vorzugsweise automatisch (wahlweise auch manuell) erzeugten Umschaltimpuls wird ein geeignetes, nicht dargestelltes Ventil (beispielsweise ein 2/5-Wegeventil) dergestalt umgeschaltet, dass nun über den zweiten Luftanschluss 411 und eine Leitung 424 die linke Zylinderhälfte des ersten doppeltwirkenden Zylinders 412 mit Druck beaufschlagt wird. Der Kolben 416 fährt dadurch und aufgrund einer gleichzeitigen Entlüftung der rechten Kolbenseite in die rechte Position und der Hebel 28 wird abgeschwenkt, wodurch die Messer 20, 22 das vorderste Etikett von dem folgenden Etikettenstrang abtrennen.

Am Ende der Kolbenbewegung wird abermals eine zweite, im Bereich des entgegengesetzten Hubendes des ersten doppeltwirkenden Zylinders 412 befindliche Überströmbohrung 426 freigegeben, die durch eine zweite Leitung 427 und ein zweites Entlüftungsventil 428 eine Verbindung zu der zweiten (rechten) Zylinderhälfte des zweiten doppeltwirkenden Zylinders 422 herstellt. Zugleich sorgt der Druckabfall in den Leitungen 414 und 421 dafür, dass die linke Zylinderhälfte des zweiten doppeltwirkenden Zylinders 422 über das Entlüftungsventil 422 entlüftet werden kann. Der Kolben 423 fährt daraufhin in die linke Position zurück, so dass der Finger 14 für eine erneute Vorschubbewegung bereit steht. An dieser Stelle sei nochmals angemerkt, dass sich das Ersatzschaltbild gem. Fig. 4 ohne Weiteres auch auf die doppelte Zylinder-Kolben-Anordnung 100 gem. der Figuren 1A, 1B und 2B übertragen lässt, wonach der gemeinsame Kolben 416 durch einen ersten und zweiten Kolben 108, 110 zu ersetzen ist.

Durch ein erneutes Umschalten des nicht dargestellten Ventils fährt der Kolben 416 des ersten doppeltwirkenden Zylinders 412 wieder in seine Grundstellung zurück und der Hebel 28 schwenkt in die Grundposition auf, woraufhin bedingt durch den Druckabfall in den Leitungen 424 und 427 einerseits und die freigegeben Überströmbohrung 418 andererseits der beschriebene Zyklus von neuem beginnt.

Die Umschaltimpulse für das nicht dargestellte Ventil werden dabei bekanntermaßen synchron zu dem Verdrängen und Verschließen der Clipmaschine und zu dem intermittierenden Füllvorgang einer der Clipmaschine vorgeschalteten Füllvorrichtung von einer gemeinsamen Steuerung ausgegeben.

In der Schaltung gemäß Fig. 4 sind also für den Antrieb und die Synchronisation aller beweglicher Teile der erfindungsgemäßen Spendevorrichtung ausschließlich passive Schaltelemente und nur zwei Luftanschlüsse notwendig, wodurch ein kostengünstiger Aufbau und ein geringer Luftkonsum erzielt wird.

Grundsätzlich ist die erfindungsgemäße Spendevorrichtung nicht nur für das Zuführen von Etiketten-Anhängern sondern beispielsweise auch für selbstklebende, auf einem Trägerband angeordnete Etiketten oder dergleichen geeignet. Auch ist es möglich, diese Spendevorrichtung mit einer integrierten oder daran angeordneten Druckereinrichtung zu versehen.

## Patentansprüche

1. Spendevorrichtung für Etiketten zum Spenden dieser an Verpackungs-Verschließmaschinen wie Wurst-Clipmaschinen mit einem eine Führungsbahn (12) aufweisenden Träger (10), einem Vorschub zum getakteten Fördern eines Etikettenstranges entlang der Führungsbahn (12) hin zu einer Vereinzelungseinrichtung (16),
**dadurch gekennzeichnet, dass** die Vereinzelungseinrichtung (16) ein erstes und ein zweites gegeneinander scherend wirkendes Messer (20, 22) zum Abtrennen des vordersten Etiketts vom Etikettenstrang aufweist, wobei beide Messer federnd gegeneinander vorgespannt sind, und wobei das erste Messer (20) mittels eines Hebels (28) um eine im Wesentlichen in der Mündungsebene der Führungsbahn und senkrecht zur Vorschubrichtung angeordnete Schwenkachse (26) schwenkbar an dem Träger (10) angelenkt ist, und dass eine in zwei entgegengesetzte Richtungen wirkende Zylinder-Kolben-Anordnung (100) vorgesehen ist, um den Hebel (28) relativ zum Träger (10) hin- und herschwenkend anzutreiben.

2. Spendevorrichtung nach Anspruch 1,
**dadurch gekennzeichnet, dass** die Zylinder-Kolben-Anordnung (100) durch zwei von entgegengesetzten Seiten in den Hebel eingelassene, durch jeweils einen Boden (106) verschlossenen Zylinderbohrungen (102, 104) mit jeweils einem Kolben (108, 110) gebildet ist, der mit einer gewölbten Kontaktfläche (116, 118) verbunden ist, die an jeweils einer korrespondierenden Auflagefläche (120, 122) des Trägers (10) anliegt.

3. Spendevorrichtung nach Anspruch 2,
**dadurch gekennzeichnet, dass** die Zylinderbohrungen (102, 104) koaxial gegenüberliegend angeordnet sind und die Wölbung der Kontaktflächen (116, 118) einen Radius aufweist, der im Wesentlichen dem halben Abstand zwischen den beiden Kontaktflächen (102, 104) beider Kolben (108, 110) entspricht.

4. Spendevorrichtung nach Anspruch 3,
**dadurch gekennzeichnet, dass** die Wölbung der Kontaktflächen (116, 118) eine kugelsegmentförmige Wölbung ist.

5. Spendevorrichtung nach einem der Ansprüche 1 bis 4,
**gekennzeichnet durch** eine gemeinsame Steuerung für die Zylinder-Kolben-Anordnung (100, 412) und die doppeltwirkende Zylinder-Kolben-Einheit (24, 420) mit einer ersten Überströmbohrung (418) im Bereich des Hubendes eines ersten Kolbens (108, 416) der Zylinder-Kolben-Anordnung (100, 412), die eine erste Verbindung (421) zu einer ersten Zylinderseite der doppeltwirkenden Zylinder-Kolben-Einheit (24, 420) herstellt, wobei in die erste Verbindung (421) ein erstes Entlüftungsventil (422) eingeschaltet ist, und mit einer zweiten Überströmbohrung (426) im Bereich des entgegengesetzten Hubendes desselben oder eines zweiten Kolbens (110, 416) der Zylinder-Kolben-Anordnung (100, 412), die eine zweite Verbindung (427) zu einer zweiten Zylinderseite der doppeltwirkenden Zylinder-Kolben-Einheit (24, 420) herstellt, wobei in die zweite Verbindung (427) ein zweites Entlüftungsventil (428) eingeschaltet ist.

6. Spendevorrichtung nach einem der Ansprüche 1 bis 5,
**dadurch gekennzeichnet, dass** weiterhin das zweite Messer (22) mittels einer Feder im Wesentlichen senkrecht zur Scherebene gegen das erste Messer (20) andrückbar ist.

7. Spendevorrichtung nach Anspruch 6,
**dadurch gekennzeichnet, dass** die Feder eine gegen das erste Messer (20) wirkende Druckfeder (34) ist.

8. Spendevorrichtung nach einem der Ansprüche 1 bis 7,
**dadurch gekennzeichnet, dass** das zweite Messer (22) eine Schneidkante (46) aufweist, die im Wesentlichen in der Mündungsebene (13) der Führungsbahn (12) liegt.

9. Spendevorrichtung nach einem der Ansprüche 1 bis 8,
**dadurch gekennzeichnet, dass** das zweite Messer (22) eine gegenüber der Scherebene derart abgewinkelte Scherfläche aufweist, dass das erste Messer (20) in jeder Phase der Schwenkbewegung an der Schneidkante (46) des zweiten Messers (22) anliegt.

10. Spendevorrichtung nach einem der Ansprüche 1 bis 9,
**dadurch gekennzeichnet, dass** das zweite Messer (22) Führungsmittel aufweist, die die Schneidkante (46) im Wesentlichen parallel zur Mündungsebene der Führungsbahn (12) führen.

11. Spendevorrichtung nach Anspruch 10,
**dadurch gekennzeichnet, dass** die Führungsmittel an dem zweiten Messer (22) befestigte und in dem Träger (10) gleitgelagerte Bolzen (30, 32) sind und dass die Feder (34) in dem Träger (10) so aufgenommen ist, dass sie gegen das Messer-ferne Ende der Bolzen (30, 32) wirkt.

12. Spendevorrichtung nach einem der vorstehenden Ansprüche,
**dadurch gekennzeichnet, dass** der Vorschub durch einen an dem Etikettenstrang angreifenden und mittels der pneumatisch antreibbaren, doppeltwirkenden Zylinder-Kolben-Einheit (24, 420) hin- und herbewegbaren Finger (14) gebildet wird.

## Claims

1. Dispensing device for labels for dispensing the latter on packaging and sealing machines such as sausage clip machines, having a support (10) comprising a guide track (12), a feed mechanism for cyclically conveying a string of labels along the guide track (12) towards a separating device (16), **characterised in that** the separating device (16) has first and second blades (20, 22) with a shearing action relative to each other for separating the foremost label from the string of labels, the two blades being spring-biased towards each other, and the first blade (20) being linked to the support (10) so as to be pivotable by means of a lever (28) about a pivot shaft (26) arranged substantially in the opening plane of the guide track and perpendicularly to the direction of feeding, and **in that** a piston and cylinder assembly (100) acting in two opposite directions is provided for driving the lever (28) to pivot back and forth relative to the support (10).

2. Dispensing device according to claim 1, **characterised in that** the piston and cylinder assembly (100) is formed by two cylinder bores (102, 104) formed in the lever from opposite sides, each closed by a bottom (106) and each having a piston (108, 110) which is connected to a curved contact surface (116, 118) which abuts in each case against a corresponding bearing surface (120, 122) of the support (10).

3. Dispensing device according to claim 2, **characterised in that** the cylinder bores (102, 104) are arranged coaxially opposite each other and the curvature of the contact surfaces (116, 118) has a radius which corresponds substantially to half the distance between the two contact surfaces (102, 104) of the two pistons (108, 110).

4. Dispensing device according to claim 3, **characterised in that** the curvature of the contact surfaces (116, 118) is a ball segment-shaped curvature.

5. Dispensing device according to any of claims 1 to 4, **characterised by** a common control system for the piston and cylinder assembly (100, 412) and the double-acting piston and cylinder unit (24, 420) having a first overflow bore (418) in the region of the stroke end of a first piston (108, 416) of the piston and cylinder assembly (100, 412), which makes a first connection (421) to a first cylinder side of the double-acting piston and cylinder unit (24, 420), a first bleed valve (422) being inserted in the first connection (421), and having a second overflow bore (426) in the region of the opposite stroke end thereof or of a second piston (110, 416) of the piston and cylinder assembly (100, 412), which makes a second connection (427) to a second cylinder side of the double-acting piston and cylinder unit (24, 420), a second bleed valve (428) being inserted in the second connection (427).

6. Dispensing device according to any of claims 1 to 5, **characterised in that** furthermore the second blade (22) can be forced by means of a spring substantially perpendicularly to the shearing plane towards the first blade (20).

7. Dispensing device according to claim 6, **characterised in that** the spring is a compression spring (34) acting towards the first blade (20).

8. Dispensing device according to any of claims 1 to 7, **characterised in that** the second blade (22) has a cutting edge (46) which lies substantially in the opening plane (13) of the guide track (12).

9. Dispensing device according to any of claims 1 to 8, **characterised in that** the second blade (22) has a shearing surface angled in relation to the shearing plane in such a way that the first blade (20) abuts against the cutting edge (46) of the second blade (22) in each stage of pivot movement.

10. Dispensing device according to any of claims 1 to 9, **characterised in that** the second blade (22) has guide means which guide the cutting edge (46) substantially parallel to the opening plane of the guide track (12).

11. Dispensing device according to claim 10, **characterised in that** the guide means are bolts (30, 32) attached to the second blade (22) and mounted in plain bearings in the support (10) and **in that** the spring (34) is held in the support (10) in such a way that it acts towards the end of the bolts (30, 32) remote from the blade.

12. Dispensing device according to any of the preceding claims, **characterised in that** the feed mechanism is formed by a finger (14) which engages the string of labels and which can be moved back and forth by means of the pneumatically driven, double-acting piston and cylinder unit (24, 420).

## Revendications

1. Distributeur d'étiquettes pour la distribution de ces dernières sur des machines de fermeture d'emballages, telles que des machines d'agrafage pour saucisses, comprenant un support (10) qui comporte une glissière de guidage (12), une avance pour le transport cadencé d'une ligne d'étiquettes le long de la glissière de guidage (12) en direction d'un dispositif de séparation (16), **caractérisé en ce que** le dispositif de séparation (16) comporte une première et une seconde lame (20, 22), avec un effet de cisaillement mutuel, pour séparer l'étiquette avant de la ligne d'étiquettes, les deux lames étant précontraintes élastiquement l'une par rapport à l'autre, et la première lame (20) s'articulant sur le support (10) au moyen d'un levier (28) avec une possibilité de pivotement autour d'un axe (26), disposé essentiellement dans le plan d'ouverture de la glissière de guidage et perpendiculairement à la direction d'avance, et qu'il est prévu un agencement cylindre - piston (100) agissant dans deux directions opposées, pour entraîner en pivotement le levier (28) par rapport au support (10).

2. Distributeur d'étiquettes suivant la revendication 1, **caractérisé en ce que** l'agencement cylindre - piston (100) est formé par deux alésages de cylindre (102, 104), pratiqués à des côtés opposés dans le levier et fermés chacun par un fond (106), avec respectivement un piston (108, 110) assemblé avec une surface de contact cintrée (116, 118), qui s'applique sur une surface d'appui (120, 122) respectivement correspondante du support (10).

3. Distributeur d'étiquettes suivant la revendication 2, **caractérisé en ce que** les alésages de cylindre (102, 104) sont disposés coaxialement en vis-à-vis et le cintrage des surfaces de contact (116, 118) présente un rayon, qui correspond essentiellement à la moitié de l'écartement entre les deux surfaces de contact (102, 104) des deux pistons (108, 110).

4. Distributeur d'étiquettes suivant la revendication 3, **caractérisé en ce que** le cintrage des surfaces de contact (116, 118) est un cintrage en forme de segment sphérique.

5. Distributeur d'étiquettes suivant l'une des revendications 1 à 4, **caractérisé par** une commande commune pour l'agencement cylindre - piston (100, 412) et l'unité cylindre - piston (24, 420) à double effet, avec un premier trou de décharge (418) dans la zone de la fin de course d'un premier piston (108, 416) de l'agencement cylindre - piston (100, 412), lequel trou établit une première liaison (421) avec un premier côté cylindre de l'unité cylindre - piston (24, 420) à double effet, une première soupape de purge d'air (422) étant montée dans la première liaison (421), et avec un second trou de décharge (426) dans la zone de la fin de course opposée du même piston ou d'un second piston (110, 416) de l'agencement cylindre - piston (100, 412), lequel trou établit une seconde liaison (427) avec un second côté cylindre de l'unité cylindre - piston (24, 420) à double effet, une seconde soupape de purge d'air (428) étant montée dans la seconde liaison (427).

6. Distributeur d'étiquettes suivant l'une des revendications 1 à 5, **caractérisé en ce que** la seconde lame (22) peut être en outre pressée contre la première lame (20) au moyen d'un ressort, de façon essentiellement perpendiculaire au plan de cisaillement.

7. Distributeur d'étiquettes suivant la revendication 6, **caractérisé en ce que** le ressort est un ressort de pression (34) agissant contre la première lame (20).

8. Distributeur d'étiquettes suivant l'une des revendications 1 à 7, **caractérisé en ce que** la seconde lame (22) présente une arête de coupe (46), qui se situe essentiellement dans le plan d'ouverture (13) de la glissière de guidage (12).

9. Distributeur d'étiquettes suivant l'une des revendications 1 à 8, **caractérisé en ce que** la seconde lame (22) présente une surface de cisaillement coudée par rapport au plan de cisaillement de telle sorte que la première lame (20) s'applique dans chaque phase du mouvement de pivotement sur l'arête de coupe (46) de la seconde lame (22).

10. Distributeur d'étiquettes suivant l'une des revendications 1 à 9, **caractérisé en ce que** la seconde lame (22) présente des moyens de guidage, qui guident l'arête de coupe (46) de façon essentiellement parallèle au plan d'ouverture de la glissière de guidage (12).

11. Distributeur d'étiquettes suivant la revendication 10, **caractérisé en ce que** les moyens de guidage sont des axes (30, 32) fixés sur la seconde lame (22) et montés glissants dans le support (10), et que le ressort (34) est logé dans le support (10) de sorte qu'il agit contre l'extrémité des axes (30, 32) distante de la lame.

12. Distributeur d'étiquettes suivant l'une des revendications précédentes, **caractérisé en ce que** l'avance est formée par un doigt (14), qui agit sur la ligne d'étiquettes et peut être animé d'un mouvement de va-et-vient au moyen de l'unité cylindre - piston (24, 420) à double effet, entraînable par voie pneumatique.
